# EUROPÄISCHE PATENTSCHRIFT

(11) **EP 1 135 892 B1**
(45) Veröffentlichungstag und Bekanntmachung des Hinweises auf die Patenterteilung: **05.03.2008**
(21) Anmeldenummer: 99964381.0
(22) Anmeldetag: 25.11.1999
(51) Int. Cl.: H04L 12/28, H04Q 3/00

(54) **VERFAHREN UND KOMMUNIKATIONSSYSTEM ZUR ÜBERTRAGUNG VON DATEN ÜBER GEMEINSAM GENUTZTE PHYSIKALISCHE KANÄLE**
COMMUNICATIONS METHOD AND SYSTEM FOR TRANSMITTING DATA OF SEVERAL COMBINED SERVICES VIA PHYSICAL CHANNELS WHICH ARE USED IN COMMON
PROCEDE ET SYSTEME DE COMMUNICATION POUR LA TRANSMISSION DE DONNEES D'UNE COMBINAISON DE PLUSIEURS SERVICES PAR L'INTERMEDIAIRE DE CANAUX PHYSIQUES UTILISES EN COMMUN

(30) Priorität: 30.11.1998 DE 19855194
(43) Veröffentlichungstag der Anmeldung: 26.09.2001
(73) Patentinhaber: SIEMENS AKTIENGESELLSCHAFT, 80333 München (DE); Traynard, Jean-Michel, 81667 München (DE)
(72) Erfinder: BENZ, Michael, D-13629 Berlin (DE); KLEIN, Anja, D-10709 Berlin (DE); SITTE, Armin, D-10405 Berlin (DE); ULRICH, Thomas, D-13505 Berlin (DE); KÖHN, Reinhard, D-14197 Berlin (DE); KRAUSE, Jörn, D-12107 Berlin (DE); MITJANA, Enric, D-89522 Heidenheim (DE); MECKLENBRÄUKER, Christoph, A-1220 Wien (AT); MENZEL, Christian, D-82216 Maisach (DE); NEWTON, Erik, Southampton S01 23FZ (GB); RANDALL, Dave, Hampshire, Hampshire S05 15SZ (GB); ÖTTL, Martin, D-82362 Weilheim (DE)
(86) Internationale Anmeldenummer: PCT/DE1999/003742
(87) Internationale Veröffentlichungsnummer: WO 2000/033601

(56) Entgegenhaltungen:
- EP-A- 0 854 596
- US-A- 4 868 811
- US-A- 5 157 660
- US-A- 5 257 283
- US-A- 5 313 461
- MICHEL MOULY, MARIE-BERNADETTE PAUTET: "GSM - The System for Mobile Communications" 1992 , CELL & SYS , MERCER ISLAND, WA U.S.A. XP002137738 235920 Seite 190, Absatz 4.1.2. -Seite 191, Absatz 4.1.3.

## Beschreibung

Die Erfindung betrifft ein Verfahren und ein Kommunikationssystem zur Übertragung von Daten einer Kombination mehrerer Dienste über gemeinsam genutzte physikalische Kanäle, insbesondere in Mobilfunksystemen mit breitbandigen Funkkanälen.

Ein Kommunikationssystem stellt für eine Übertragung von Daten zwischen einer Datenquelle und einer Datensenke ein oder mehrere physikalische Übertragungskanäle bereit. Die Übertragungskanäle können unterschiedlichster Art sein, z.B. für eine leitungsgebundene Übertragung mit elektrischen oder optischen Signalen oder für eine Funkübertragung über eine Funkschnittstelle mit Hilfe elektromagnetischer Wellen. Im Folgenden interessiert insbesondere die Funkübertragung.

Die Funkübertragung wird in Mobilfunksystemen genutzt, um eine Verbindung zu nichtstationären Teilnehmerendgeräten herzustellen. Eine Mobilstation eines Mobilfunksystems ist ein solches nichtstationäres Teilnehmerendgerät. Die Mobilstation kann innerhalb der Netzabdeckung von beliebigen Standorten aus eine Verbindung anfordern bzw. es kann eine Verbindung zur Mobilstation aufgebaut werden. Das weitverbreitetste Mobilfunksystem ist GSM (global system for mobile communications), das für einen einzigen Dienst, zur Sprachübertragung entwickelt wurde. Die Datenrate dieses Dienstes wurde als konstant angenommen. Das GSM-Mobilfunksystem wird als System der 2. Generation bezeichnet.

Für die darauffolgende, die 3. Mobilfunkgeneration, die z.Z. in Europa unter der Bezeichnung UMTS (universal system for mobile communications) standardisiert wird, ist im Gegensatz dazu eine Mehrzahl von Diensten vorgesehen, die innerhalb eines Übertragungsprotokolls übertragen werden sollen.

Die Standardisierungsdokumente ETSI SMG2/UMTS L23 expert group, Tdoc SMG2 UMTS-23 257/98, vom 6.10.1998, Tdoc SMG2 508/98 und Tdoc SMG2 515/98, vom 16.11.1998, geben einen Überblick über den heutigen Entwicklungsstand der Standardisierung und insbesondere über die Anforderungen dahingehend, wie ein Übertragungsprotokoll den Transport von Daten mehrerer Dienste unterstützen kann.

Die Nutzung eines gemeinsamen physikalischen Kanals für die Übertragung von Daten mehrerer Dienste setzt voraus, daß eine eindeutige Abbildungsvorschrift die Zuordnung der Dienste zu unterschiedlichen Segmenten des physikalischen Kanals angibt. Ein physikalischer Kanal wird beispielsweise durch ein Frequenzband, einen Spreizkode (CDMA code division multiple access) und ggf. einen Zeitschlitz innerhalb eines Rahmens definiert.

Zur Beschreibung der Abbildungsvorschrift werden folgende Begriffe verwendet:

### Transport Format (TF):

Ein Transportformat definiert eine Datenrate, eine Kodierung, eine Verwürfelung (Interleaving), eine Datenratenanpassung durch Punktierung und eine Fehlerschutzvorschrift eines Transportkanals für einen Dienst.

### Transport Format Set (TFS):

Hiermit wird ein Satz möglicher Transportformate bezeichnet, die für einen speziellen Dienst erlaubt sind.

### Transport Format Combination (TFC):

Dieser Begriff gibt eine mögliche Kombination von Transportformaten der verschiedenen Dienste an, die auf einen gemeinsamen physikalischen Kanal abgebildet werden.

### Transport Format Combination Set (TFCS):

Hiermit wird ein Satz möglicher TFC als Teilmenge aller TFC bezeichnet, die für eine spezielle Verbindung erlaubt sind.

### Transport Format Combination Identifier (TFCI):

Diese Information gibt die aktuell verwendete Kombination von Transportformaten innerhalb des TFCS an.

Beispiele zu den Transportformaten können ETSI SMG2/UMTS L23 expert group, Tdoc SMG2 UMTS-23 257/98, vom 6.10.98, S.14-16, entnommen werden.

Für eine bedarfsgerechte Wahl der aktuell verwendeten Kombination von Transportformaten der verschiedenen Dienste ist eine Änderbarkeit des TFC und damit eine regelmäßig Signalisierung des TFCI notwendig. Diese Signalisierung bindet jedoch Übertragungskapazität. Je größer die Anzahl möglicher Kombinationsmöglichkeiten (TFCS), umso mehr Kapazität wird zur Signalisierung benötigt. Die EP-A-0 854 596 offenbart deshalb nur die Signalisierung einer einzigen Datenrate für beide Übertragungsrichtungen, wenn die beiden Datenraten gleich sind.

Der Erfindung liegt die Aufgabe zugrunde, ein Verfahren und ein Kommunikationssystem anzugeben, die die benötigte Signalisierungskapazität reduzieren ohne die Anzahl der Kombinationsmöglichkeiten und deren Auswahl einzuschränken. Diese Aufgabe wird durch das Verfahren nach den Merkmalen des Anspruchs 1 und das Kommunikationssystem mit den Merkmalen des Anspruch 10 gelöst. Vorteilhafte Weiterbildungen sind den Unteransprüchen zu entnehmen.

Erfindungsgemäß wird in Dienste mit hoher und geringer Datenratendynamik unterschieden und eine angepaßte Signalisierungsart des aktuell benutzten Transportformats benutzt. Die Datenrate der Daten eines Dienstes kann über der Zeit stark und/oder schnell schwanken (hohe Dynamik) oder nur wenig und/oder langsam (geringe Dynamik). Die Datenratendynamik entspricht dem Differential der Datenratenänderung über der Zeit.

Es findet keine gemeinsame Signalisierung für alle Dienste statt sondern eine individualisierbare Signalisierung, wobei die Dienste mit unterschiedlicher Dynamik über die vorhandenen physikalischen Kanäle übertragen werden und ohne diese Signalisierung nicht ohne weiteres auswertbar sind. Für Dienste mit hoher Datenratendynamik wird eine In-band-Signalisierung des Transportformats und für Dienste mit geringer Datenratendynamik wird eine Signalisierung des Transportformats in einem getrennten Kanal durchgeführt. Die In-Band-Signalisierung unterstützt die hohe Dynamik der Datenratenänderung mancher Dienste durch eine entsprechend schnelle Signalisierung neu gewählter Transportformate währenddessen für Dienste mit sich nur langsam oder im begrenzten Umfang ändernden Datenraten eine etwas langsamere verbindungsbegleitende Signalisierung gewählt wird.

Aufbauend auf einer Festlegung einer Kombination der aktuell benutzten Transportformate der Dienste und deren Signalisierung werden die Daten der Dienste entsprechend der Kombination der Transportformate über die aktuell verfügbaren gemeinsamen physikalischen Kanäle übertragen und empfangsseitig entsprechend der signalisierten Kombination der Transportformate ausgewertet.

Bei gleicher Anzahl von Kombinationsmöglichkeiten werden für die In-Band-Signalisierung weniger Kapazitäten benötigt, da nur ein Teil der Dienste ständig bedient werden muß.

Nach einer vorteilhaften Weiterbildung der Erfindung erfolgt die Datenübertragung über eine Funkschnittstelle eines Funk-Kommunikationssystems. Bei Funk-Kommunikationssystemen, z.B. UMTS, sind die Übertragungsressourcen besonders knapp. Die Anzahl verfügbarer Frequenzbänder ist begrenzt und jeder Betreiber kann davon nur einen gewissen Teil nutzen. Trotzdem sollen für manche Dienste hohe Datenraten (bis 2 Mbit/s) angeboten werden. Die Erfindung bringt bei einem solchen Funk-Kommunikationssystem besondere Vorteile.

Eine besonders flexible Zuteilungsstrategie von Übertragungskapazitäten zu Verbindungen wird ermöglicht, wenn eine Funkschnittstelle durch einen breitbandigen Frequenzkanal gebildet wird, wobei Signale in mehreren durch Spreizkodes bzw. zusätzlich durch Zeitschlitze separierbare physikalischen Kanälen gleichzeitig übertragen werden. Durch eine Veränderung des Spreizkodes oder durch Zuteilung zusätzlicher Spreizkodes können die Übertragungskapazitäten schnell dem Bedarf angepaßt werden. Die Erfindung eignet sich sowohl für den Einsatz im FDD (frequency division multiplex) als auch im TDD (time division multiplex) Modus eines Funk-Kommunikationssystems.

Weiterhin ist es vorteilhaft für den getrennten Kanal zur Signalisierung des Transportformats für Dienste mit geringer Datenratendynamik einen verbindungsbegleitender Kontrollkanal (FACH) zu nutzen. Ein solcher Kontrollkanal wird für verbindungsbegleitende Aufgaben - Verbindungsaufbau und Verbindungsabbau - angeboten und kann ohne zusätzlichen Aufwand mitgenutzt werden. Beispielsweise ist die Sprachübertragung ein Dienst mit geringer Datenratendynamik, wobei als mögliche Datenraten beispielsweise eine Standarddatenrate und "0" festgelegt sind. Zu Verbindungsbeginn wird die Standarddatenrate signalisiert und zum Verbindungsende die Datenrate "0". Diese Signalisierung bezieht sich auf die jeweilige Datenrate, ein Aufbau oder Abbau der Verbindung wird in diesem Falle nicht signalisiert. Gleiches gilt für Sprachpausen. Im letzteren Fall wird die Signalisierung im getrennten Kanal nur bei einem Wechsel der Datenrate eines Dienstes mit geringer Datenratendynamik durchgeführt. Eine ständige Wiederholung des aktuell gewählten Transportformats für diesen Dienst wird unterdrückt.

Nach einer weiteren vorteilhaften Weiterbildung der Erfindung wird eine Teilinformation bezüglich der Kombination der aktuell benutzten Transportformate für Dienste mit hoher Datenratendynamik signalisiert, wobei die Teilinformation eine binäre Kodierung mit einer Stellenzahl verwendet, die im Vergleich zur Gesamtheit der erlaubten Kombinationen aller Dienste reduziert ist. Diese Information wird als Teilinformation bezeichnet, da sich nur im Zusammenhang mit der Signalisierung im getrennten Kanal eine vollständige Abbildungsvorschrift ergibt. Für eine besonders schnelle Signalisierung wird die Teilinformation in jedem Rahmen der Datenübertragung des gemeinsamen physikalischen Kanals übertragen. Damit ergibt sich auch eine sehr schnelle Änderung der gewählten Kombination, die nur durch eine evt. durchgeführte Verwürfelung der Daten über mehrere Rahmen eingeschränkt wird.

Die erfindungsgemäße Signalisierung kann weitergehend an die Datenratendynamik angepaßt werden, wenn innerhalb der In-Band-Signalisierung für die Dienste eine individuelle Signalisierungskapazität einstellbar ist. So wird z.B. eine Kodierung und Verteilung der Teilinformation auf mehrere Rahmen (Interleaving) derartig vorgenommen, daß das Transportformat von Diensten mit sehr hoher Datenratendynamik schon nach der Auswertung von einem oder zwei Rahmen für die Empfangsseite erkennbar ist.

Ausführungsbeispiele der Erfindung werden anhand der beiliegenden Zeichnungen näher erläutert.

Dabei zeigen
- Fig 1: eine schematische Darstellung eines Funk-Kommunikationssystems,
- Fig 2: ein Schichtenmodell der Übertragungsprotokolle,
- Fig 3, 4: Abbildungen von Daten verschiedener Dienste auf gemeinsame physikalische Kanäle,
- Fig 5: eine Tabelle mit einer Abbildungsvorschrift für Dienste mit hoher Datenratendynamik, und
- Fig 6: eine rahmenweise Datenübertragung mit In-Band-Signalisierung.

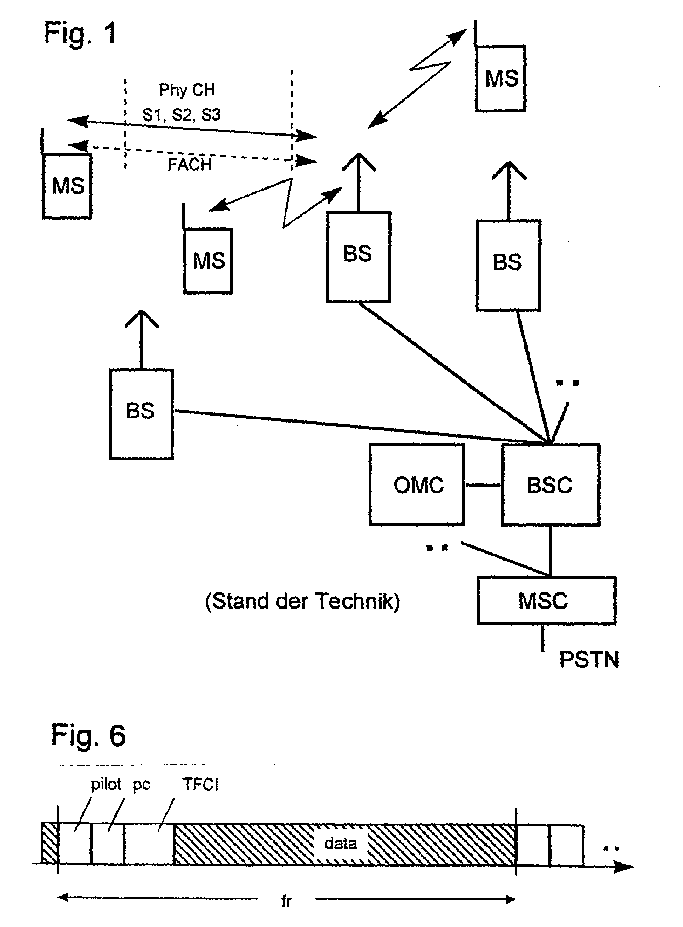

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zur Steuerung der Übertragungsressourcen verbunden. Jede dieser Einrichtungen RNM ermöglicht wiederum eine Verbindung zu zumindest einer Basisstation BS und repräsentiert Mittel, die Dienste S in zwei Klassen anhand einer dienstindividuellen Datenratendynamik einteilen.

Eine Basisstation BS kann über eine Funkschnittstelle eine Verbindung zu Teilnehmerstationen, z.B. Mobilstationen MS oder anderweitigen mobilen und stationären Endgeräten aufbauen. Durch jede Basisstation BS wird zumindest eine Funkzelle gebildet. In Fig 1 sind Verbindungen zur Übertragung von Nutzinformationen zwischen einer Basisstation BS und Mobilstationen MS dargestellt. Innerhalb von einer Verbindung V1 werden Daten von beispielsweise drei Diensten S (S1, S2, S3) innerhalb eines oder mehrerer physikalischer Kanäle Phy CH und Signalisierungsinformationen über einen verbindungsbegleitenden Kontrollkanal FACH (Forward link Access CHannel) übertragen.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Im Funk-Kommunikationssystem nach Fig 1 sind sowohl in den Basisstationen BS als auch den Mobilstationen MS Datenübertragungsmittel und Signalisierungsmittel vorgesehen, die miteinander kommunizieren. Die Datenübertragungsmittel dienen der Übertragung von Daten einer Kombination mehrerer Dienste S über die aktuell verfügbaren gemeinsamen physikalischen Kanäle Phy CH. Die Signalisierungsmittel führen für Dienste S1, S2 mit hoher Datenratendynamik eine In-band-Signalisierung des Transportformats TF und für Dienste S3 mit geringer Datenratendynamik eine Signalisierung des Transportformats TF im getrennten Kanal FACH durch.

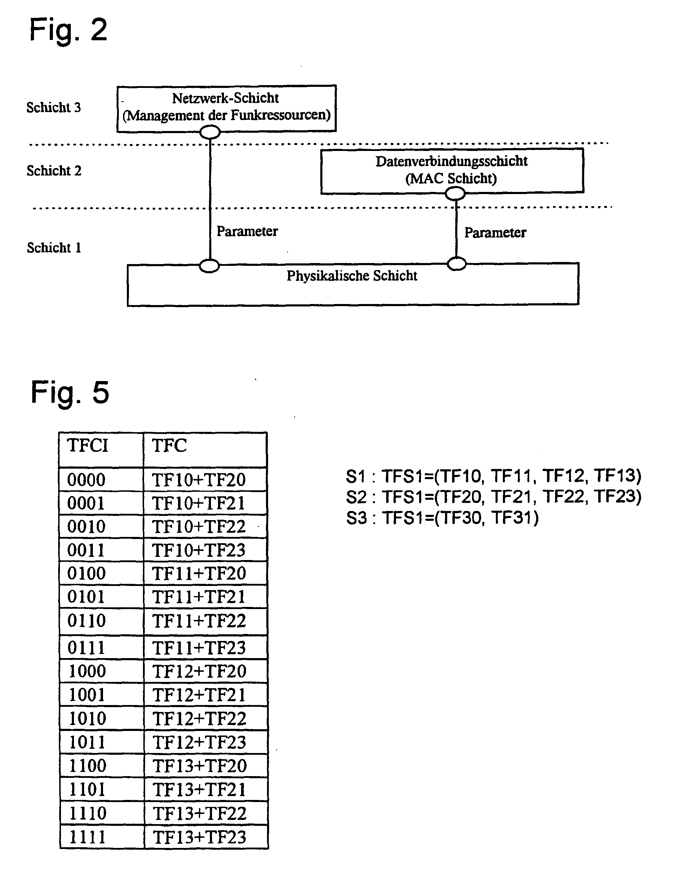

Das Schichtenmodell nach Fig 2 zeigt eine Einteilung der Protokolle des Funkkommunikationssystems in drei Schichten.
Schicht 1: physikalische Schicht zur Beschreibung aller Funktionen zur Bitübertragung über ein physikalisches Medium (z.B. Kodierung, Modulation, Sendeleistungskontrolle, Synchronisation etc.),
Schicht 2: Schicht der Datenverbindung zur Beschreibung der Abbildung von Daten auf die physikalische Schicht und deren Kontrolle,
Schicht 3: Netzwerk-Schicht zur Steuerung der Ressourcen der Funkschnittstelle.

Weitere Einzelheiten sind auch ETSI SMG2/UMTS L23 expert group, Tdoc SMG2 508/98, vom 16.11.1998, S.9-25 (figure 11), entnehmbar. In der Schicht 3 wird für eine Verbindung das TFCS festgelegt, währenddessen in der Schicht 2 die Auswahl einer Kombination (eines TFC) erfolgt, die wie später gezeigt mittels eines TFCI In-Band- und in einem getrennten Kanal signalisiert wird.

Der Parameteraustausch zwischen den Schichten 1 und 2 unterstützt die Funktionen eines Transfers von Rahmen mit Daten der Schicht 2 über die Funkschnittstelle und der Anzeige des Status der Schicht 1 an höhere Schichten. Der Parameteraustausch zwischen den Schichten 1 und 3 unterstützt die Kontrolle der Konfiguration der Übertragung in der Schicht 1 und generiert Systeminformation über die Schicht 1.

Die Abbildung der Daten verschiedener Verbindungen S auf einen gemeinsamen physikalischen Kanal Phy CH entspricht dabei der Interaktion der Schichten 1 und 2.

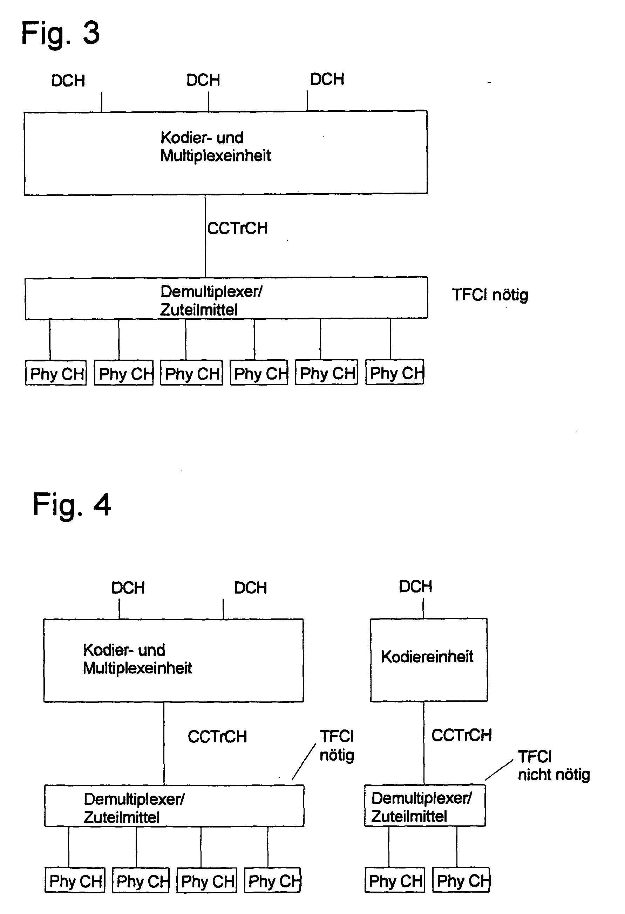

Entsprechend der Figuren 3 und 4 ergibt sich die Notwendigkeit einer Signalisierung von Transportformaten TF für aktuell übertragene Dienste.

In Fig 3 ist als funktionelle Darstellung eine Kodier- und Multiplexeinheit gezeigt, die Daten mehrerer Datenkanäle DCH, diese entsprechen jeweils den Daten eines Dienstes S1, S2, S3, auf einen kodierten gemeinsamen Transportkanal CCTrCH abbildet. Eine Abbildung ist dabei eine Vorschrift, nach welchem Bitmuster die Daten in eine serielle Datensequenz eingetragen werden. Ein Demultiplexer/Zuteilmittel verteilt die Daten des kodierten gemeinsamen Transportkanals CCTrCH auf mehrere physikalische Kanäle Phy CH. Über die physikalischen Kanäle Phy CH werden somit jeweils ständig Daten mehrerer Dienste S1, S2, S3 übertragen. Kein physikalischer Kanal Phy CH ist einem Dienst S1 oder S2 oder S3 allein sondern dem kodierten gemeinsamen Transportkanal CCTrCH mit allen seinen Diensten S1, S2, S3 zugeordnet.

Da die Empfangsseite diese Abbildung nachvollziehen und die Daten aus den physikalischen Kanälen Phy CH auslesen und wieder in getrennten Transportkanälen DCH der Dienste darstellen muß, ist eine Signalisierung vonnöten. Diese Signalisierung in Form einer Teilinformation TFCI gibt die aktuell benutzte Kombination der Transportformate TF der Dienste wieder. Welche Kombinationen für die Verbindung zugelassen sind (TFCS) wurde zum -Verbindungsaufbau vereinbart.

Fig 4 zeigt die Abbildung in leicht abgewandelter Form, wobei klarer wird, daß nur bei einer gemeinsamen Nutzung von physikalischen Kanälen Phy CH durch mehrere Dienste S1, S2, S3 die Signalisierung der Teilinformation TFCI nötig ist. Nutzt ein Dienst S1 oder S2 oder S3 einen physikalischen Kanal Phy CH ausschließlich, so kann auf die Signalisierung der Teilinformation TFCI verzichtet werden.

Erfindungsgemäß wird jedoch nicht für alle Dienste ein einheitliche Signalisierung gewählt, sondern eine Unterscheidung der Dienste S in Dienste S1, S2 mit hohen Datenratendynamik und Dienst S3 mit geringer Datenratendynamik vorgenommen. Es sei angenommen, daß S1 und S2 zwei Datendienste sind, z.B. S1 eine Videoübertragung und S2 eine Internet-Anbindung. S3 sei eine Sprachübertragung. Die Einteilung der Dienste in eine der zwei Klassen wird zu Verbindungsbeginn festgelegt, sie kann jedoch während der Verbindung geändert werden. Letzteres erfolgt, wenn sich die Zahl der Dienste ändert und somit In-Band-Signalisierungskapazität frei oder benötigt wird oder wenn sich der Charakter eines Dienstes bezüglich der Datenratendynamik ändert.

Die erlaubten Transportformate TF sind wie aus Fig 5 folgt festgelegt. Die Sprachübertragung unterscheidet nur in zwei Datenraten (Grunddatenrate 16 kBit/s oder keine Datenübertragung bzw. Sprachpause). Für die zwei Dienste S1, S2 sind jeweils 4 verschiedene Transportformate TF verfügbar.

Das Transportformat TF30, TF31 des Dienstes S3 wird getrennt von den physikalischen Kanälen Phy CH der Datenübertragung in einem schnellen verbindungsbegleitenden Kontrollkanal FACH übertragen. Da die Änderungen der Datenrate eher selten sind, gehen kaum Übertragungskapazitäten verloren, wenn die Signalisierung etwas länger dauert.

Die Transportformate. TF der Dienste S1, S2 werden entsprechend der Tabelle in Fig 5 kodiert. Da insgesamt 32 Kombinationen der verschiedenen Transportformate TF für die drei Dienste S1, S2, S3 möglich sind, bräuchte man in binärer Darstellung 5 Bit um diese Information zu kodieren. Entsprechend Fig 5 werden jedoch nur 4 Bit benötigt, da das aktuelle Transportformat TF30 oder TF31 für S3 getrennt signalisiert wird.

Die 4 Bits der Signalisierung für S1 und S2 werden In-Band übertragen. Entsprechend Fig 6 ist innerhalb einer rahmenweisen Übertragung von Daten (data) zusammen mit weiteren Informationen auch Kapazität zur Übertragung der aktuell gewählten Kombination der Transportformate in Form der Teilinformation TFCI vorgesehen. Im FDD Modus hat ein Rahmen eine Dauer von 10 ms, wobei Bits einer Pilotsequenz (pilot) der Kanalschätzung dienen, Bits (pc) zur Sendeleistungsregelung benötigt werden und Bits zur In-Band-Signalisierung des TFCI reserviert sind. Es folgt ein Datenanteil data mit Nutzinformationen.

Eine Fehlerschutzkodierung des TFCI auf z.B. 32 Bit und eine Verwürfelung der Nutzinformationen über mehrere Rahmen sind in Fig 6 nicht gezeigt. Die Beschreibung der gewählten Transportformate gilt für eine Übertragungsrichtung. In eine Verbindung können natürlich in beiden Übertragungsrichtungen (UL Aufwärtsrichtung von der Mobilstation MS zur Basisstation BS und DL Abwärtsrichtung von der Basisstation BS zur Mobilstation MS) Daten übertragen werden, wobei für die Datenraten durchaus asymmetrisch und entsprechend unterschiedliche Transportformate TF festgelegt sein können.

## Patentansprüche

1. Verfahren zur Übertragung von Daten einer Kombination mehrerer Dienste (S) über gemeinsam genutzte physikalische Kanäle (Phy CH), bei dem
- für die Dienste (S) jeweils eine Menge erlaubter Transportformate (TF) festgelegt wird,
- eine Kombination der aktuell benutzten Transportformate (TF) der Dienste (S) festgelegt wird,
- eine Einteilung der Dienste (S) in zumindest zwei Klassen anhand einer dienstindividuellen Datenratendynamik vorgenommen wird,
- für Dienste (S) mit hoher Datenratendynamik eine In-band-Signalisierung des Transportformats (TF) und für Dienste (S) mit geringer Datenratendynamik eine Signalisierung des Transportformats (TF) in einem getrennten Kanal (FACH) durchgeführt wird,
- die Daten der Dienste (S) entsprechend der Kombination der Transportformate (TF) über gemeinsame physikalische Kanäle (Phy CH) übertragen werden, und
- empfangsseitig die Daten entsprechend der signalisierten Kombination der Transportformate (TF) ausgewertet werden.

2. Verfahren nach Anspruch 1, bei dem
die Datenübertragung über eine Funkschnittstelle eines Funk-Kommunikationssystems erfolgt.

3. Verfahren nach Anspruch 2, bei dem
die Funkschnittstelle durch einen breitbandigen Frequenzkanal gebildet wird, wobei Signale in mehreren durch Spreizkodes und ggf. zusätzlich durch Zeitschlitze separierbare physikalischen Kanälen gleichzeitig übertragen werden.

4. Verfahren nach einem der vorherigen Ansprüche, bei dem der getrennte Kanal (FACH) zur Signalisierung des Transportformats (TF) für Dienste mit geringer Datenratendynamik ein verbindungsbegleitender Kontrollkanal ist.

5. Verfahren nach Anspruch 4, bei dem
die Signalisierung im getrennten Kanal (FACH) nur bei einem Wechsel der Datenrate eines Dienstes (S) mit geringer Datenratendynamik durchgeführt wird.

6. Verfahren nach einem der vorherigen Ansprüche, bei dem die Daten mehrerer Dienste (S) auf einen kodierten gemeinsamen Transportkanal (CCTrCH) abgebildet und die Daten des kodierten gemeinsamen Transportkanals (CCTrCH) wiederum gleichmäßig auf mehrere physikalische Kanäle (Phy CH) aufgeteilt werden.

7. Verfahren nach einem der vorherigen Ansprüche, bei dem eine Teilinformation (TFCI) bezüglich der Kombination der aktuell benutzten Transportformate (TF) für Dienste mit hoher Datenratendynamik signalisiert wird, wobei die Teilinformation (TFCI) eine binäre Kodierung mit einer Stellenzahl verwendet, die im Vergleich zur Gesamtheit der erlaubten Kombinationen aller Dienste reduziert ist.

8. Verfahren nach Anspruch 7, bei dem
die Teilinformation (TFCI) in jedem Rahmen (fr) der Datenübertragung des gemeinsamen physikalischen Kanals (Phy CH) übertragen wird.

9. Verfahren nach einem der vorherigen Ansprüche, bei dem innerhalb der In-Band-Signalisierung für die Dienste (S) eine individuelle Signalisierungskapazität einstellbar ist.

10. Kommunikationssystem
mit Datenübertragungsmitteln zur Übertragung von Daten einer Kombination mehrerer Dienste (S) über gemeinsam genutzte physikalische Kanäle, wobei für die Dienste (S) jeweils eine Menge erlaubter Transportformate (TF) und eine Kombination der aktuell benutzten Transportformate (TF) der Dienste (S) festgelegt wird,
mit Mitteln zur Steuerung der Übertragungsressourcen, die die Dienste (S) in zumindest zwei Klassen anhand einer dienstindividuellen Datenratendynamik einteilen,
mit Signalisierungsmitteln, die für Dienste (S) mit hoher Datenratendynamik eine In-band-Signalisierung des Transportformats (TF) und für Dienste (S) mit geringer Datenratendynamik eine Signalisierung des Transportformats (TF) in einem getrennten Kanal (FACH) durchführen.

## Claims

1. Method for transmitting data for a combination of a plurality of services (S) via jointly used physical channels (Phy CH), in which
- a quantity of permitted transport formats (TF) is stipulated for each of the services (S),
- a combination of the currently used transport formats (TF) for the services (S) is stipulated,
- the services (S) are classified into at least two classes on the basis of service-specific data rate dynamics,
- for services (S) with high data rate dynamics, the transport format (TF) is signaled in-band, and for services (SF) with low data rate dynamics, the transport format (TF) is signaled in a separate channel (FACH),
- the data for the services (S) are transmitted via common physical channels (PhyCH) on the basis of the combination of the transport formats (TF), and
- at the reception end, the data are evaluated on the basis of the signaled combination of the transport formats (TF).

2. Method according to claim 1, in which
the data transmission takes place via a radio interface of a radio communication system.

3. Method according to claim 2, in which
the radio interface is formed by a broadband frequency channel, with signals being transmitted simultaneously in a plurality of physical channels which can be separated by spread codes and, if appropriate, additionally by time slots.

4. Method according to one of the preceding claims, in which
the separate channel (FACH) for signaling the transport format (TF) for services with low data rate dynamics is a monitoring channel accompanying the connection.

5. Method according to claim 4, in which
the signaling in the separate channel (FACH) takes place only if the data rate for a service (S) with low data rate dynamics changes.

6. Method according to one of the preceding claims, in which
the data for a plurality of services (S) are mapped onto a coded common transport channel (CCTrCH), and the data of the coded common transport channel (CCTrCH) are in turn split uniformly over a plurality of physical channels (Phy CH) .

7. Method according to one of the preceding claims, in which
a partial information item (TFCI) relating to the combination of the currently used transport formats (TF) is signaled for services with high data rate dynamics, a partial information item (TFCI) using a binary coding having a number of places which is reduced in comparison with the total amount of the permitted combinations of all the services.

8. Method according to claim 7, in which
the partial information item (TFCI) is transmitted in each frame (FR) of the data transmission of the common physical channel (Phy CH).

9. Method according to one of the preceding claims, in which an individual signaling capacity can be set within the in-band signaling for the services (S).

10. Communication system
having data transmission means for transmitting data for a combination of a plurality of services (S) via jointly used physical channels, where a quantity of permitted transport formats (TF) and a combination of the currently used transport formats (TF) for the services (S) are stipulated for each of the services (S), having means for controlling the transmission resources which classify the services (S) into at least two classes on the basis of service-specific data rate dynamics,
having signaling means which, for services (S) with high data rate dynamics, signal the transport format (TF) in-band, and for services (S) with low data rate dynamics, signal the transport format (TF) in a separate channel (FACH).

## Revendications

1. Procédé de transmission de données d'une combinaison de plusieurs services (S) sur des canaux physiques utilisés en commun (Phy CH), dans lequel
- pour les services (S), un ensemble de formats de transport (TF) permis est respectivement déterminé,
- une combinaison des formats de transport des services (TF) actuellement utilisés des services (S) est déterminée,
- une répartition des services (S) en au moins deux classes est effectuée à l'aide d'une dynamique de débit de données individuelle pour chaque service,
- pour des services (S) avec une dynamique élevée du débit de données est effectuée une signalisation en bande du format de transport (TF) et, pour des services (S) avec une dynamique faible du débit de données, une signalisation du format de transport (TF) dans un canal séparé (FACH),
- les données des services (S) sont transmises conformément à la combinaison des formats de transport (TF) via des canaux physiques communs (Phy CH) et
- côté récepteur, les données sont évaluées conformément à la combinaison signalée des formats de transport (TF).

2. Procédé selon la revendication 1, dans lequel la transmission de données se fait via une interface radio d'un système de radiocommunication.

3. Procédé selon la revendication 2, dans lequel l'interface radio est constituée par un canal de fréquences à large bande, des signaux étant transmis simultanément dans plusieurs canaux physiques séparables par des codes d'étalement et, le cas échéant, additionnellement, par des créneaux temporels.

4. Procédé selon l'une des revendications précédentes, dans lequel le canal séparé (FACH) servant à la signalisation du format de transport (TF) pour des services avec une dynamique faible du débit de données est un canal de contrôle accompagnant la liaison.

5. Procédé selon la revendication 4, dans lequel la signalisation dans le canal séparé (FACH) n'est effectuée qu'en cas de changement du débit de données d'un service (S) avec une dynamique faible du débit de données.

6. Procédé selon l'une des revendications précédentes, dans lequel les données de plusieurs services (S) sont appliquées sur un canal de transport commun codé (CCTrCH) et les données du canal de transport commun codé (CCTrCH), quant à elles, sont distribuées régulièrement sur plusieurs canaux physiques (Phy CH).

7. Procédé selon l'une des revendications précédentes, dans lequel une information partielle (TFCI) concernant la combinaison des formats de transport (TF) actuellement utilisés pour des services avec une dynamique élevée du débit de données est signalée, l'information partielle (TFCI) utilisant un codage binaire avec un nombre de positions qui est réduit en comparaison avec l'ensemble des combinaisons de tous les services permises.

8. Procédé selon la revendication 7, dans lequel l'information partielle (TFCI) est transmise dans chaque trame (fr) de la transmission de données du canal physique commun (Phy CH).

9. Procédé selon l'une des revendications précédentes, dans lequel une capacité de signalisation individuelle est réglable au sein de la signalisation en bande pour les services (S).

10. Système de communication avec des moyens de transmission de données pour transmettre des données d'une combinaison de plusieurs services (S) sur des canaux physiques utilisés en commun, respectivement un ensemble de formats de transport (TF) permis et une combinaison des formats de transport (TF) actuellement utilisés des services (S) étant déterminés pour les services (S), avec des moyens de commande des ressources de transmission qui répartissent les services (S) en au moins deux classes à l'aide d'une dynamique du débit de données individuelle pour chaque service, avec des moyens de signalisation qui effectuent, pour des services (S) avec une dynamique élevée du débit de données, une signalisation en bande du format de transport (TF) et, pour des services (S) avec une dynamique faible du débit de données, une signalisation du format de transport (TF) dans un canal séparé (FACH).
